# EUROPÄISCHE PATENTSCHRIFT

(11) **EP 3 315 433 B1**
(45) Veröffentlichungstag und Bekanntmachung des Hinweises auf die Patenterteilung: **15.07.2020**
(21) Anmeldenummer: 17198836.3
(22) Anmeldetag: 27.10.2017
(51) Int. Cl.: B65G 47/61, B65G 33/26, B65G 33/02

(54) **ÜBERGABEVORRICHTUNG FÜR PRODUKTETRÄGER MIT HALTEMITTELN**
TRANSFER DEVICE FOR PRODUCT CARRIERS WITH IMPROVED RETENTION MEANS
DISPOSITIF DE TRANSMISSION POUR SUPPORT DE PRODUITS DOTÉ DES MOYENS DE RETENUE

(30) Priorität: 01.11.2016 CH 14582016; 28.03.2017 CH 4132017
(43) Veröffentlichungstag der Anmeldung: 02.05.2018
(73) Patentinhaber: Ferag AG, 8340 Hinwil (CH)
(72) Erfinder: STAUBER, Erwin, 8624 Grüt (CH)
(74) Vertreter: Rentsch Partner AG

(56) Entgegenhaltungen:
- EP-A1- 0 694 487
- EP-A2- 0 802 133
- EP-A2- 1 518 461
- DE-A1-102011 051 599
- DE-C1- 3 819 102
- JP-B1- 3 101 817
- US-A- 3 644 085

## Beschreibung

### GEBIET DER ERFINDUNG

Die vorliegende Erfindung betrifft eine Übergabevorrichtung zur vereinzelten Übergabe von Produkteträgern mit Haltemitteln an eine Hängefördervorrichtung, eine Förderanlage zum Fördern von Produkteträgern mit Haltemitteln, mit einer Übergabevorrichtung und einer Hängefördervorrichtung, und ein Verfahren zum Betrieb der Förderanlage.

### HINTERGRUND DER ERFINDUNG

Auf dem Gebiet der Fördertechnik hängen die Auswahl und die Ausgestaltung der Förderanlagen und der Fördervorrichtungen hauptsächlich von der Art der zu fördernden Produkte ab. Die zu fördernden Produkte können dabei je nach Art z.B. direkt in geeigneten Transporteinheiten der Fördervorrichtungen gefördert werden oder mittels geeigneten Produkteträgern in die Transporteinheiten aufgenommen und gefördert werden. Für gewisse Anforderungen sind wiederum keine separaten Transporteinheiten nötig und die Produkte oder die Produkteträger können direkt in der Fördervorrichtung gefördert werden. Häufig weisen Fördervorrichtungen und/oder Förderanlagen je nach Anforderung abschnittsweise oder bereichsweise unterschiedliche Förderstrecken mit oder ohne Produkteträger, Transporteinheiten etc. auf, zwischen welchen Übergabe- und/oder Zuführvorgänge stattfinden.

Beim Einsatz von Produkteträgern können sich je nach Art der Kopplung der Produkteträger, z.B. über geeignete Haltemittel, an die Fördervorrichtung oder an die Transporteinheiten der Fördervorrichtung besondere Fragestellungen hinsichtlich der Förderung, der Übergabe, der Vereinzelung etc. ergeben. Solche Fragestellungen sind von hoher Relevanz in der Bekleidungsindustrie, wie z.B. in Kollektionslagern, Versandlagern oder chemischen Reinigungen, wo die Kleidungsstücke mittels Kleiderbügeln unterschiedlichster Art gefördert werden. Die Kleiderbügel weisen dabei in der Regel Haken auf, welche in die Fördervorrichtungen oder Transporteinheiten eingreifen und so die Kopplung zwischen Produkteträger und Fördervorrichtung oder Transporteinheit bereitstellen.

Die EP0802133 B1 beschreibt eine Vorrichtung zum Vereinzeln von Förderträgern mit einer drehbar angetriebenen Gewindespindel, derer Gewindesteigung in Förderrichtung anwächst, wobei die Spindel in mehrere Bereiche unterschiedlicher Steigung aufgeteilt ist. In jedem Bereich sind mindestens zwei verschiedene Gewindesteigungen vorgesehen, wobei bezogen auf die Förderrichtung die erste Gewindesteigung in jedem Bereich jeweils kleiner ist als die letzte im vorangegangenen Bereich, und die Gewindenutbreite der Gewindespindel in Förderrichtung zunimmt. Es wird weiter eine Eingabevorrichtung beschrieben, welche aus einer Vereinzelungsvorrichtung und einer dieser nachgeschalteten Übergabeförderer besteht, wobei die Förderträger von der Vereinzelungsvorrichtung über eine Schräge auf den Übergabeförderer übergeben werden. Vom Übergabeförderer werden die Förderträger an eine Übergabestelle gefördert, wo sie über eine Schräge in eine Fördertasche einer Hängeförderanlage gleiten.

Die EP1914182 B1 beschreibt ein Zuführ-Transport-System für Bügel mit darauf hängenden Gegenständen, insbesondere Kleidungsstücken, mit einer Transport-Schiene zur Aufnahme und Führung von Haken der Bügel, mit einer an einem Ende der Transport-Schiene angeordneten Übergabe-Station zur Übergabe je eines Bügels auf einzeln transportierbare Halteelemente, die jeweils in ihrem unteren Bereich eine Aufnahme-Öffnung für einen Haken eines Bügels aufweisen und mit einem der Übergabe-Station zugeordneten Übergabe-Rad. Das Übergabe-Rad nimmt jeweils ein Halteelement in einer Position auf, in der es gegenüber der Vertikalen schräg aus dem Übergabe-Rad herausragt, so dass die Aufnahme-Öffnung in einer Projektion auf die Horizontale nach oben offen ist. Durch einen Übergabe-Spalt fällt jeweils taktweise ein Bügel nach unten, der von der Aufnahme-Öffnung aufgefangen wird, da das freie Ende des Hakens sich über der Aufnahme-Öffnung befindet. Der Haken fällt damit in die Aufnahme-Öffnung hinein und wird hierdurch vom Halteelement gefangen.

Die EP1518461 A2 beschreibt eine Vorrichtung nach dem Oberbegriff des Anspruchs 1 zum Übergeben von Objekten, umfassend Haken, welche geeignet sind, Schlaufen aufzunehmen, mit welchen die Objekte bereitgestellt werden. Die Vorrichtung umfasst ferner einen Förderer, welcher angeordnet ist, um die Haken entlang einer Förderrichtung zu fördern, und eine Welle mit einer schraubenförmigen Nut, welche einen weiteren Haken aufweist, wobei der weitere Haken ausgebildet ist, mit den Schlaufen derart zu interagieren, dass die Objekte vom Haken übernommen und auf die Welle gefördert werden können.

Die DE4326095 C1 beschreibt Aufgabevorrichtungen an Hängeförderern für an Kleiderbügelhaken hängende Fördergüter, umfassend an einem Tragprofil laufende, von einem Zugmittel gezogene Förderhaken mit einem Haltefinger, eine Schrittfördereinrichtung für an Kleiderbügelhaken hängende Fördergüter, z.B. Kleidungsstücke, eine kurze Übergabebahn in Verlängerung der Schrittfördereinrichtung mit einem U-förmigen Querschnitt und einer Stoppnase am freien Ende. Die Übergabebahn und der Laufweg der Förderhaken stehen im spitzen Winkel zueinander und der Haltefinger taucht in die Nut zwischen den U-Schenkeln ein, so dass der Haltefinger einen an der Stoppnase anstehenden Kleiderbügelhaken unterfahren und über die Stoppnase herausheben kann. In die U-Schenkel der Übergabebahn sind endlos umlaufende, parallele Förderriemen integriert, auf deren oberem Trum die Kleiderbügelhaken aufsitzen.

### DARSTELLUNG DER ERFINDUNG

Bei der Förderung von Produkten mittels Produkteträgern mit Haltemitteln ist das zuverlässige Eingreifen der Haltemittel in die Fördervorrichtungen oder Transporteinheiten der Fördervorrichtungen von grosser Wichtigkeit für die Minimierung von Fehlern in der Förderung der Produkte. Um eine hohe Förderleistung bzw. Fördergeschwindigkeit zu gewährleisten, spielen dabei zuverlässige Übergabevorgänge und/oder Zuführvorgänge der Produkte oder Produkteträger zwischen verschiedenen Abschnitten oder Bereichen einer Förderanlage eine wichtige Rolle. Bei bestimmten Haltemitteln, wie z.B. Haken, ergeben sich zusätzliche Anforderungen im Zusammenhang mit der Vereinzelung der Produkte oder Produkteträger, insbesondere wenn die Haltemittel dazu neigen, durch gegenseitige Interaktion die Förderleistung zu beeinträchtigen.

Es ist daher eine Aufgabe der Erfindung, den Stand der Technik der Förderung von Produkteträgern mit Haltemitteln, insbesondere die vereinzelte Übergabe, zu verbessern.

Diese Aufgabe wird durch die Merkmale der unabhängigen Ansprüche gelöst. Vorteilhafte Ausgestaltungen der Erfindung sind in den abhängigen Ansprüchen und in der vorliegenden Beschreibung und den Figuren gegeben.

Die Erfindung betrifft eine Übergabevorrichtung zur vereinzelten Übergabe von Produkteträgern mit Haltemitteln an eine Hängefördervorrichtung, umfassend eine Förderwendel, welche eine Förderstrecke für die Haltemittel mit einem Förderabschnitt und einem Übergabeabschnitt definiert, wobei die Förderstrecke im Förderabschnitt eine lineare Bahn beschreibt und im Übergabeabschnitt zur linearen Bahn überlagert eine transversal gekrümmte Bahn beschreibt.

Die Förderwendel bietet den Vorteil, dass eine kontrollierte Förderung der Produkteträger ermöglicht wird, insbesondere für Produkteträger mit Haltemitteln, welche dazu neigen, unkontrollierte Bewegungen, wie Pendelbewegungen o.ä., auszuführen. Im Zusammenhang mit dieser Erfindung wird unter kontrollierter Förderung eine Förderung der Produkteträger verstanden, bei welcher die Produkteträger eine geführte Bahn, zum Beispiel über einen definierten Auflagepunkt auf der Förderwendel, beschreiben und dass z.B. Fallhöhen bei Übergaben minimiert oder vermieden werden können. Erfindungsgemäß verbleiben bei einer kontrollierten Förderung die Haltemittel bzw. die Produkteträger bei einem Anhalten der Förderwendel im Wesentlichen an der jeweiligen aktuellen Position stehen und können von dieser Position bei Wiederaufnahme der Rotation der Förderwendel weitergefördert werden. Bei Ausgestaltungen mit Haken, welche jeweils auf der Förderwendel über einen Auflagepunkt aufliegen, bleibt in der Regel jeweils der Auflagepunkt an der jeweiligen Position stehen wenn die Förderwendel anhält, und die Haken können von dort bei Wiederaufnahme der Rotation der Förderwendel weitergefördert werden.

Die Förderstrecke wird in der Regel durch die Ausformung der Förderwendel definiert. Durch eine derart definierte Förderstrecke kann die kontrollierte Förderung der Produkteträger verbessert werden. Der Förderabschnitt kann mit Vorteil dazu dienen, die Produkteträger auf die lineare Bahn der Förderstrecke entlang der Längsachse der Förderwendel zu bringen, auf welcher die Produkteträger kontrolliert gefördert werden können. Dies kann insbesondere von Vorteil sein, falls die Produkteträger von einer anderen Förderstrecke, auf welcher die Förderung der Produkteträger in reduziertem Mass kontrolliert ist, z.B. von einer Schiene, auf welcher die Produkteträger frei laufend gefördert werden, auf die Übergabevorrichtung gelangen.

Durch die transversal gekrümmte Bahn der Förderstrecke im Übergabeabschnitt können die Produkteträger zusätzlich zur linearen Bewegung entlang der Längsachse der Förderwendel quer zur Längsachse der Förderwendel bewegt werden, was eine kontrollierte Übergabe der Produkteträger an eine Hängefördervorrichtung ermöglicht, welche zum Beispiel neben der Förderwendel, parallel zur Förderwendel oder mit der Förderwendel einen Winkel einschliessend, angeordnet ist. In diesem Zusammenhang ist unter transversaler Bahn eine Bahn zu verstehen, welche in einer Ebene senkrecht zur Längsachse der Förderwendel liegt.

Erfindungsgemäß wird die transversal gekrümmte Bahn durch eine Überlagerung einer horizontalen und einer vertikalen Komponente in dieser Ebene beschrieben so dass die transversal gekrümmte Bahn insbesondere eine horizontale Komponente aufweist, und dadurch eine kontrollierte Übergabe an eine neben der Übergabevorrichtung angeordnete Hängefördervorrichtung ermöglicht wird Vorteilhafterweise wird im Übergabeabschnitt die transversal gekrümmte Bahn derart zur linearen Bahn aus dem Förderabschnitt überlagert, dass die durch die Förderwendel definierte Förderstrecke im Wesentlichen entlang ihrer gesamten Strecke kontinuierlich verläuft und abrupte bzw. unstetige Bewegungen der Produkteträger minimiert oder vermieden werden können.

Eine besonders vorteilhafte Anwendung der Erfindung findet sich in der Bekleidungsindustrie, wo die Produkteträger als Kleiderbügel und die Haltemittel als Kleiderhaken ausgebildet sind. Die Produkteträger können aber auch Taschen oder Behälter sein, welche über Haltemittel, wie zum Beispiel Haken, verfügen. Häufig werden die Produkteträger aus einer Lagereinrichtung, wie zum Beispiel einem Magazin, oder einer anderen Fördervorrichtung der Übergabevorrichtung übergeben.

In einer Ausgestaltung werden die Produkteträger, insbesondere Kleiderbügel, über Schienen auf die Förderwendel übergeben. Die Produkteträger können dabei in unregelmässigen Abständen von den Schienen ankommen, was in der Regel bei Schienen der Fall ist, auf welchen die Produkteträger mittels Gravitation angetrieben werden. Vorzugsweise werden die an die Übergabevorrichtung übergebenen Produkteträger durch die Förderwendel derart vereinzelt und kontrolliert gefördert, dass die Produkteträger auf der Förderwendel mit einem definierten Abstand zueinander gefördert werden.

Vorzugsweise liegt die Förderstrecke im Übergabeabschnitt für eine Mehrheit der oder für alle Förderwendelpositionen, d.h. Rotationswinkel der Förderwendel, jeweils in einem lokalen Minimum der Oberfläche, vorzugsweise bezüglich der Längsachse der Förderwendel, in welchem die Haltemittel der Produkteträger gefördert werden.

In einer Ausgestaltung weist die Förderwendel Wendelgänge auf, in welchen die Haltemittel der Produkteträger gefördert werden können. Die Wendelgänge bieten den Vorteil, dass definierte An- oder Eingriffspunkte für die Haltemittel der Produkteträger bereitgestellt werden, so dass eine Förderstrecke definiert werden kann. Ein Wendelgang umfasst in der Regel einen Wendelboden und am Wendelboden anschliessende Wendelflanken. Als Haken ausgebildete Haltemittel können zum Beispiel in den Wendelböden aufliegen, so dass ein Auflagepunkt eines Hakes entlang der definierten Förderstrecke gefördert wird. Die Haken können seitlich an den Wendelflanken anliegen, wobei die Haken bei Rotation der Förderwendel durch die Wendelflanken entlang der Förderstrecke angestossen und gefördert werden können.

Durch Rotation der Förderwendel kann daher im Förderabschnitt der Förderstrecke eine lineare Förderung der Produkteträger entlang der Längsachse der Förderwendel erreicht werden.

Im Übergabeabschnitt kann die Rotation der Förderwendel in Verbindung mit einer bestimmten Ausformung der Förderwendel im Übergabeabschnitt, wie weiter in der vorliegenden Beschreibung erläutert wird, die zusätzliche transversal gekrümmte Bahn der Förderstrecke herbeiführen.

In der Regel wird die Förderwendel durch geeignete Antriebsmittel, vorzugsweise Elektromotoren, angetrieben.

Vorzugsweise wird pro Wendelgang eine definierte Anzahl an Haken bzw. Produkteträger gefördert. In einer vorteilhaften Ausgestaltung wird pro Wendelgang jeweils ein einzelner Haken bzw. Produkteträger gefördert. In einer weiteren Ausgestaltung werden pro Wendelgang zwei Haken bzw. Produkteträger gefördert. Optional kann sich die definierte Anzahl an Haken bzw. Produkteträger pro Wendelgang zwischen den Wendelgängen unterscheiden. Zum Beispiel können die Wendelgänge alternierend jeweils ein oder zwei Haken bzw. Produkteträger fördern. Die Wendelgänge bieten daher den Vorteil, dass die Produkteträger in einem definierten Abstand zueinander gefördert werden können, ohne dass diese sich stark gegenseitig beeinflussen, z.B. durch Aneinanderstossen, was eine effiziente Vereinzelung der Produkteträger ermöglicht.

Erfindungsgemäß weist die Förderwendel mindestens einen Vereinzelungswendelgang zur Vereinzelung von aneinander liegenden Haken, auf, welcher eine zu den übrigen Wendelgängen unterschiedliche Steigung aufweist. Vorzugsweise weist der Vereinzelungswendelgang zumindest teilweise eine Nullsteigung auf. Der Vereinzelungswendelgang entsteht vorzugsweise aus einer Abstufung in einer Wendelflanke eines Wendelgangs, über welche Abstufung die zwei aneinander liegenden Haken räumlich getrennt werden können. Der bezüglich der Förderrichtung vordere Haken kann durch den Wendelgang in Förderrichtung weitergefördert werden, während der hintere Haken in den Vereinzelungswendelgang eintritt.

Durch die unterschiedliche Steigung des Vereinzelungswendelgangs kann der hintere Haken weiter vom vorderen Haken räumlich getrennt werden. Nach einer Umdrehung kann der vom vorderen Haken räumlich getrennte hintere Haken den Vereinzelungswendelgang verlassen und in Förderrichtung weitergefördert werden.

In einer Ausgestaltung weisen die Wendelgänge in einem Achsschnitt ein trapezförmiges Profil auf. Dabei nehmen in dieser Ausgestaltung die Böden der Wendelgänge die kürzere Grundseite und die Wendelflanken die Schenkel des Trapezes ein. In einer Variante weist die Förderwendel zwischen zwei benachbarten Wendelflanken zweier benachbarter Wendelgänge in einem Achsschnitt ebenfalls ein trapezförmiges Profil auf, wobei die auf den Achsschnitt projizierte Aussenfläche der Förderwendel die kürzere Grundseite des Trapezes einnimmt.

Optional sind die Wendelflanken abgerundet. Vorzugsweise sind die Wendelflanken konkav abgerundet. Dies verbessert die sichere Positionierung der Haltemittel in den Wendelgängen und daher die kontrollierte Förderung der Produkteträger.

In einer weiteren Ausgestaltung weisen die Wendelgänge in einem Achsschnitt ein spitzes Profil auf.

Die Wendelgänge können abschnittsweise abwechselnd spitze oder trapezförmige Profile aufweisen.

Erfindungsgemäß endet die Förderwendel im Übergabeabschnitt in einer exzentrisch angeordneten Führungszunge, welche einen im Vergleich zum Querschnitt der Förderwendel im Förderabschnitt sich verjüngenden Querschnitt aufweist.

Die Führungszunge bietet den Vorteil, dass ein Haltemittel bis zur Übergabe an die Hängefördervorrichtung geführt bzw. kontrolliert gefördert werden kann. Durch die exzentrische Anordnung kann erreicht werden, dass ein mit der Führungszunge gefördertes Haltemittel von der linearen Bahn der Förderstrecke abgelenkt wird und zur linearen Bahn überlagert eine transversal gekrümmte Bahn beschreibt.

Der sich verjüngende Querschnitt bietet den Vorteil, dass ein Abschnitt des Haltemittels in einer transversalen Ebene über den Querschnitt der Förderwendel hinausragen kann, welcher bei der Übergabe an die Hängefördervorrichtung z.B. zum Eingriff mit einem Eingriffmittel genutzt werden kann.

Erfindungsgemäß weist die Förderwendel im Übergabeabschnitt einen Übergabewendelgang mit einer quasi-antiklastischen Fläche auf, wobei die Förderstrecke im Übergabeabschnitt derart in der quasi-antiklastischen Fläche liegt, dass die Haltemittel zu einer linearen Bahn überlagert eine transversal gekrümmte Bahn beschreiben.

Unter einer quasi-antiklastischen Fläche wird eine Fläche verstanden, welche an einem gegebenen Punkt der Fläche jeweils in zwei verschiedenen Richtungen sich durch das Vorzeichen unterscheidende Krümmungen aufweist, d.h. konkav in eine erste Richtung und konvex in eine zweite Richtung gekrümmt ist. Die zwei Richtungen brauchen dabei nicht senkrecht zueinander orientiert zu sein. Mit Vorteil kommt die Förderstrecke bei Rotation der Förderwendel so in der quasi-antiklastischen Fläche zu liegen, dass die bei der Übergabe im Übergabewendelgang geförderten Haltemittel zusätzlich zur linearen Bahn eine transversal gekrümmte Bahn beschreiben.

Vorzugsweise mündet der Übergabewendelgang in die exzentrisch angeordnete Führungszunge, von welcher das Haltemittel bzw. der Produkteträger an die Hängefördervorrichtung übergeben werden kann.

Vorzugsweise umfasst die Oberfläche des Übergabewendelgangs eine Sattelfläche mit einer schraubenlinienförmigen Hauptrichtung.

Die schraubenlinienförmige Hauptrichtung der Sattelfläche bietet den Vorteil, dass die Haltemittel bei Rotation der Förderwendel in einem Sattelpunkt gefördert werden können, was eine verbesserte kontrollierte Förderung ermöglicht.

Entlang der schraubenlinienförmigen Hauptrichtung können die Krümmungen entlang der Richtung senkrecht zur Hauptrichtung variieren.

In einer Variante stimmt der Krümmungsradius am Anfang des Übergabewendelgangs mit dem Radius des Querschnitts der Förderwendel im Förderabschnitt überein und verkleinert sich bis zum Ende der Förderwendel. Der Übergabewendelgang kann in eine exzentrisch angeordnete Führungszunge mit einem kreissegmentförmigen Querschnitt und einem Krümmungsradius des Kreissegments, welcher kleiner als der Radius des Querschnitts der Förderwendel im Förderabschnitt ist, münden.

Die Ausgestaltung der Förderwendel mit dem Übergabewendelgang mit einer Sattelfläche bietet daher den Vorteil, dass die Haltemittel kontrolliert gefördert werden können, wobei die Förderstrecke im Übergabeabschnitt durch die Form der Oberfläche des Übergabewendelgangs und die Rotation der Förderwendel eine transversal gekrümmte Bahn beschreiben kann. Durch die kontrollierte Förderung kann die Übergabeleistung, insbesondere die Fördergeschwindigkeit, erheblich gesteigert werden.

In einer Ausgestaltung weist der Übergabewendelgang eine Wendeltiefe auf, welche grösser als der halbe Kerndurchmesser der Förderwendel im Förderabschnitt ist.

Erfindungsgemäß geht die Förderwendel aus dem Förderabschnitt kontinuierlich in den Übergabewendelgang im Übergabeabschnitt über.

Der kontinuierliche Übergang der Förderwendel aus dem Förderabschnitt in den Übergabewendelgang im Übergabeabschnitt bietet den Vorteil, dass die Förderstrecke ebenfalls kontinuierlich verlaufen kann und dass abrupte Förderbewegungen der Haltemittel bzw. der Produkteträger minimiert oder vermieden werden können.

Die Erfindung betrifft weiter eine Förderanlage zum Fördern von Produkteträgern mit Haltemitteln, umfassend eine Übergabevorrichtung gemäss der vorliegenden Beschreibung, eine Hängefördervorrichtung mit einer Mehrzahl von Transporteinheiten für die Produkteträger, wobei die Transporteinheiten Eingriffmittel für die Haltemittel der Produkteträger aufweisen, und die Förderanlage einen Transferbereich aufweist, in welcher die Produkteträger von der Übergabevorrichtung an die Hängefördervorrichtung übergeben werden.

In der Regel ist die Hängefördervorrichtung seitlich an der Übergabevorrichtung angeordnet, wobei die Förderwendel mit einer Förderstrecke der Hängefördervorrichtung im Transferbereich einen Winkel einschliessen oder parallel angeordnet sein kann.

Vorzugsweise wird der Transferbereich durch den Übergabeabschnitt der Förderwendel und der Förderstrecke der Hängefördervorrichtung, welche beim Übergabeabschnitt der Förderwendel angeordnet ist, gebildet. Ein Produkteträger wird in der Regel jeweils derart von der Übergabevorrichtung an die Hängefördervorrichtung übergeben, dass das Haltemittel des Produkteträgers in das Eingriffmittel einer im Transferbereich bereitstehenden Transporteinheit eingreift und der Produkteträger von der Transporteinheit in der Hängefördervorrichtung weitergefördert werden kann.

In einer Ausgestaltung sind die Eingriffmittel der Transporteinheiten Ösen, in welche die Haltemittel, vorzugsweise Haken, der Produkteträger eingreifen können.

In einer Ausgestaltung sind die Transporteinheiten im Transferbereich derart geneigt angeordnet, dass die Öffnungen der Ösen senkrecht zur Übergaberichtung der Haltemittel angeordnet sind.

In einer Ausgestaltung weist die Hängefördervorrichtung im Transferbereich eine Förderstrecke auf, welche parallel zur Förderwendel angeordnet ist.

Eine parallele Anordnung der Förderstrecke der Hängefördervorrichtung im Transferbereich und der Förderwendel bietet den Vorteil, dass der Transferbereich im Vergleich zu Anordnungen, bei welchen die Übergabevorrichtung mit einem grossen Winkel zur Hängefördervorrichtung zuläuft, vergrössert werden kann. Eine Vergrösserung des Transferbereichs entlang der Förderstrecke bietet den Vorteil, dass das Zeitfenster für eine mögliche Übergabe der Produkteträger an die Hängefördervorrichtung vergrössert werden kann, so dass die Übergabe der Produkteträger an die Hängefördervorrichtung besser abgestimmt werden kann, insbesondere durch Anpassung der Fördergeschwindigkeiten der Produkteträger und der Transporteinheiten.

In einer Ausgestaltung weist die Hängefördervorrichtung eine Laufschiene auf, wobei die Transporteinheiten auf der Laufschiene mit veränderlichem Abstand zueinander förderbare Laufwagen sind.

In einer Ausgestaltung weist die Förderanlage eine Steuerung auf, welche die Übergabe der Produkteträger von der Übergabevorrichtung an die Hängefördervorrichtung steuert.

Die Steuerung kann u.a. die Fördergeschwindigkeiten der Transporteinheiten und/oder der Produkteträger, die Bereitstellung der Transporteinheiten und/oder der Produkteträger etc. steuern.

Vorzugsweise steuert die Steuerung die Hängefördervorrichtung und/oder die Übergabevorrichtung derart, dass bei der Übergabe eines Produkteträgers jeweils eine Transporteinheit im Transferbereich bereitgestellt wird.

In einer Ausgestaltung umfasst die Förderanlage eine erste Antriebseinheit zum Antrieb der Förderwendel und eine zweite Antriebseinheit zum Antrieb der Transporteinheiten im Transferbereich, wobei die erste und die zweite Antriebseinheit durch die Steuerung derart gesteuert werden, dass im Transferbereich bei der Übergabe eines Haltemittels von der Übergabevorrichtung an die Hängefördervorrichtung jeweils eine Transporteinheit bereitgestellt ist.

In einer Ausgestaltung umfasst die erste Antriebseinheit eine erste Antriebswendel, welche mit der Förderwendel wirkverbunden ist. In einer Variante greift die erste Antriebswendel in Erhöhungen zwischen den Wendelgängen der Förderwendel ein und kann so die Förderwendel antreiben.

In einer Ausgestaltung umfasst die zweite Antriebseinheit eine zweite Antriebswendel, welche mit den Transporteinheiten der Hängefördervorrichtung wirkverbindbar ist. In einer Variante weist die zweite Antriebswendel Wendelgänge auf, in welche Mitnehmerelemente der Transporteinheiten eingreifen können, so dass die Transporteinheiten bei Rotation der zweiten Antriebswendel entlang der Förderstrecke der Hängefördervorrichtung gefördert werden können.

Die Steuerung bietet den Vorteil, dass bei der Übergabe eines Haltemittels jeweils eine Transporteinheit bereitgestellt ist und somit eine zuverlässige Übergabe der Produkteträger von der Übergabevorrichtung an die Hängefördervorrichtung ermöglicht wird.

In einer Ausgestaltung synchronisiert die Steuerung die Fördergeschwindigkeit der Transporteinheiten mit der Fördergeschwindigkeit der Produkteträger bei der Übergabe.

In Ausgestaltungen mit der ersten Antriebseinheit umfassend eine erste Antriebswendel und der zweiten Antriebseinheit umfassend eine zweite Antriebswendel können optional die erste Antriebswendel und die zweite Antriebswendel, z.B. über einen Riemen, wirkverbunden sein, so dass die Rotationen der ersten und der zweiten Antriebswendel gekoppelt sind.

In einer Ausgestaltung ist die Steuerung ausgebildet, im Transferbereich die Anzahl der pro Transporteinheit übergebenen Produkteträger zu steuern.

Dies bietet den Vorteil, dass je nach Anforderung einzelne oder mehrere Produkteträger pro Transporteinheit gefördert werden können. Zum Beispiel kann es vorteilhaft sein, pro Transporteinheit ein Bekleidungsoberteil und eine Hose in einem Set zu fördern. In einer Variante steuert die Steuerung die Anzahl der pro Transporteinheit übergebenen Produkteträger, indem die Steuerung eine Transporteinheit so lange im Transferbereich warten lässt, bis dieser Transporteinheit die gewünschte Anzahl an Produkteträgern von der Übergabevorrichtung übergeben werden.

In einer Ausgestaltung ist an der Förderwendel ein mit der Steuerung verbundener erster Sensor angeordnet, welcher Haltemittel des Produkteträgers auf der Förderwendel detektieren kann.

Dies bietet den Vorteil, dass die Steuerung erkennen kann, ob ein Haltemittel zum Übergabeabschnitt gefördert wird und demnach eine Transporteinheit benötigt wird. Bei Bedarf kann dann die Steuerung im Transferbereich eine Transporteinheit bereitstellen. Der erste Sensor kann ein optischer Sensor, z.B. eine Kamera oder Lichtschranke, oder ein induktiver Sensor sein.

In einer Ausgestaltung ist zwischen einer Staustrecke der Hängefördervorrichtung und dem Transferbereich ein Barriereelement angeordnet, welche mit der Steuerung zur Freigabe von jeweils einer Transporteinheit bei Detektion eines Haltemittels auf der Förderwendel durch den ersten Sensor, verbunden ist.

Die Staustrecke ist vorzugsweise stromaufwärts vom Transferbereich angeordnet. Das Barriereelement ist ausgebildet, Transporteinheiten wahlweise zu blockieren oder freizugeben. Mit der Staustrecke können vorteilhafterweise die Transporteinheiten so vor dem Transferbereich gestaut werden, dass eine gesteuerte Abgabe der Transporteinheiten in den Transferbereich dann ermöglicht wird, wenn eine Transporteinheit für ein Haltemittel bzw. einen Produkteträger benötigt wird.

In Ausgestaltungen mit einem Barriereelement ist vorzugsweise der erste Sensor ausgebildet, auf der Förderwendel unerwünschte Haltemittel von Produkteträgern zu detektieren, wobei die Steuerung ausgebildet ist, bei Detektion von unerwünschten Haltemitteln das Barriereelement derart zu aktivieren, dass die Transporteinheiten in der Staustrecke gestaut werden. Durch das Stauen der Transporteinheiten in der Staustrecke bei Detektion von unerwünschten Haltemitteln auf der Förderwendel können die Produkteträger mit den unerwünschten Haltemitteln, anstatt an Transporteinheiten übergeben zu werden, ausgeschleust werden.

Ferner ist die Steuerung vorteilhafterweise ausgebildet, das Barriereelement derart zu deaktivieren, dass die gestauten Transporteinheiten rechtzeitig wieder aus der Staustrecke freigegeben und zur Übernahme von nachfolgenden Produkteträgern mit erwünschten Haltemitteln im Transferbereich bereitgestellt werden können.

Vorzugsweise umfasst die Förderanlage eine Auffangschiene zum Ausschleusen von Produkteträgern mit unerwünschten Haltemitteln, wobei die Auffangschiene im Transferbereich derart angeordnet ist, dass Produkteträger von der Übergabevorrichtung an die Auffangschiene übergeben werden, falls im Transferbereich keine Transporteinheit bereitgestellt ist. Durch das Stauen der Transporteinheiten in der Staustrecke bei Detektion von unerwünschten Haltemitteln auf der Förderwendel können die Produkteträger mit den unerwünschten Haltemitteln durch Übergabe an die Auffangschiene ausgeschleust werden.

Unerwünschte Haltemittel, d.h. solche, welche nicht mittels Transporteinheiten auf der Hängefördervorrichtung weitergefördert werden sollen, können zum Beispiel aneinander liegende oder überkreuzte Haken, oder solche mit leeren Produkteträgern, z.B. Kleiderbügel ohne Kleidungsstücke, sein.

Die Auffangschiene ist vorzugsweise derart ausgebildet, dass die Haltemittel der Produkteträger in die Auffangschiene eingreifen können. Die Auffangschiene ist vorzugsweise geneigt angeordnet, so dass die an die Auffangschiene übergebenen Produkteträger schwerkraftgetrieben weitergefördert werden können.

In Ausgestaltungen ohne Auffangschiene können die unerwünschten Haltemittel mit den entsprechenden Produkteträgern von der Förderwendel ins Leere oder in eine Sammeleinrichtung, z.B. eine Kiste, fallen gelassen werden.

In Ausgestaltungen mit einem Vereinzelungswendelgang kann optional ein zusätzlicher Sensor stromaufwärts vom Vereinzelungswendelgang angeordnet sein, welcher an dieser Stelle unerwünschte Haltemittel, insbesondere aneinander liegende Haken, auf der Förderwendel detektieren kann, wobei der erste Sensor stromabwärts vom Vereinzelungswendelgang angeordnet ist. Eine solche Anordnung hat den Vorteil, dass mittels dem ersten Sensor detektiert werden kann, ob die vom zusätzlichen Sensor detektierten aneinander liegenden Haken durch den Vereinzelungswendelgang erfolgreich getrennt werden konnten. Falls aneinander liegenden Haken nicht getrennt werden konnten, kann dies durch den ersten Sensor detektiert werden, so dass diese Haken, bzw. Produkteträger, ausgeschleust werden können.

In einer Ausgestaltung ist stromabwärts vom Transferbereich ein zweiter Sensor angeordnet, welcher ausgebildet ist, die Anzahl Haltemittel in jeweils einem Eingriffmittel der Transporteinheit zu ermitteln.

Der zweite Sensor kann ein optischer Sensor, z.B. eine Kamera oder Lichtschranke, oder ein induktiver Sensor sein. Bei einer gesteuerten Übergabe einer bestimmten Anzahl von Produkteträgern an eine Transporteinheit kann mittels dem zweiten Sensor überprüft werden, ob der Transporteinheit tatsächlich die gewünschte Anzahl Produkteträger übergeben worden sind.

In einer Ausgestaltung weist die Förderanlage weitere Sensoren auf, welche ausgebildet sind, Haltemittel und/oder Transporteinheiten an verschiedenen Bereichen der Förderanlage zu detektieren.

Insbesondere kann an der Staustrecke ein dritter Sensor angeordnet sein, welcher ausgebildet ist, Transporteinheiten in der Staustrecke zu detektieren. Vorzugsweise ist der dritte Sensor mit der Steuerung verbunden. Der dritte Sensor bietet den Vorteil, dass ermittelt werden kann, ob in der Staustrecke Transporteinheiten bereitstehen, welche bei Bedarf in den Transferbereich abgegeben werden können.

Die Erfindung betrifft weiter ein Verfahren zum Betrieb einer Förderanlage gemäss der vorliegenden Beschreibung, umfassend die Schritte: i) Fördern der Haltemittel der Produkteträger auf der Förderwendel der Übergabevorrichtung; ii) Übergabe der Produkteträger von der Übergabevorrichtung an die Hängefördervorrichtung im Transferbereich, wobei die Haltemittel bei der Übergabe in das Eingriffmittel einer Transporteinheit kontrolliert gefördert werden.

Die kontrollierte Förderung bietet den Vorteil, dass bei der Übergabe Fördervorgänge, bei welchen unkontrollierte Bewegungen begünstigt werden, wie z.B. Fallvorgänge, minimiert oder vermieden werden können.

In einer Ausgestaltung des Verfahrens liegen die Haltemittel im Übergabeabschnitt der Förderwendel auf einem Auflagepunkt auf der Förderwendel, welcher von der durch die Längsachse der Förderwendel definierten Vertikalebene abweicht, derart auf, dass ein Abschnitt des Haltemittels, vorzugsweise eines Hakens, in einer transversalen, vorzugsweise zur Hängefördervorrichtung hin orientierten, Richtung über die Querschnittsfläche der Förderwendel hinausragt.

Der über die Querschnittsfläche der Förderwendel hinausragende Abschnitt des Haltemittels kann vorteilhafterweise dazu genutzt werden, diesen Abschnitt in ein Eingriffmittel einer im Transferbereich bereitgestellten Transporteinheit einzuführen, bevor das Haltemittel in das Eingriffmittel eingreift und der Produkteträger an die Transporteinheit übergeben wird. Auf diese Weise kann die kontrollierte Übergabe verbessert werden. Insbesondere kann die Fallhöhe des Haltemittels in das Eingriffmittel bei der Übergabe minimiert und so eine Störung minimiert oder vermieden werden.

Vorzugsweise werden die Haltemittel bei der Übergabe kontrolliert derart gefördert, dass jeweils ein Abschnitt des Haltemittels, vorzugsweise eines Hakens, in das Eingriffmittel, vorzugsweise eine Öse, einer Transporteinheit ragt, bevor das Haltemittel die Übergabevorrichtung verlässt und an die Hängefördervorrichtung übergeben wird.

In einer Ausgestaltung des Verfahrens detektiert der erste Sensor unerwünschte Haltemittel von Produkteträgern auf der Förderwendel und aktiviert bei Detektion von unerwünschten Haltemitteln das Barriereelement derart, dass die Transporteinheiten in der Staustrecke gestaut werden.

Durch das Stauen der Transporteinheiten in der Staustrecke bei Detektion von unerwünschten Haltemitteln auf der Förderwendel können die Produkteträger mit den unerwünschten Haltemitteln, anstatt an Transporteinheiten übergeben zu werden, ausgeschleust werden, z.B. indem die Produkteträger mit den unerwünschten Haltemitteln bei Ausgestaltungen der Förderanlage mit einer Auffangschiene, an die Auffangschiene übergeben werden.

Ferner kann die Steuerung das Barriereelement derart deaktivieren, dass die gestauten Transporteinheiten rechtzeitig aus der Staustrecke wieder freigegeben und zur Übernahme von nachfolgenden Produkteträgern mit erwünschten Haltemitteln im Transferbereich bereitgestellt werden können.

### LISTE DER FIGUREN

Ausführungsformen der Erfindung werden anhand der nachfolgenden Figuren und der dazugehörigen Beschreibung näher erläutert. Es zeigen:
- Fig. 1: eine perspektivische Teilansicht einer Ausführungsform einer Förderanlage;
- Fig. 2: eine perspektivische Ansicht der Förderanlage aus Fig. 1 um den Transferbereich;
- Fig. 3: eine Seitenansicht der Förderanlage aus Fig. 1 um den Transferbereich;
- Fig. 4: eine Frontalansicht des Transferbereichs der Förderanlage aus Fig. 1;
- Fig. 5a-h: eine schematische Darstellung des Übergabeabschnitts in einer Frontalansicht der Förderwendel;
- Fig. 6: eine weitere perspektivische Teilansicht der Förderanlage aus Fig. 1;
- Fig. 7: eine rückwärtige perspektivische Teilansicht der Förderanlage aus Fig. 1 ;
- Fig. 8a-c: Seitenansichten einer Ausführungsform der Förderwendel mit einem Vereinzelungswendelgang für verschiedene Positionen der Förderwendel;
- Fig. 9: eine perspektivische Teilansicht einer weiteren Ausführungsform einer Förderanlage;
- Fig. 10: eine weitere perspektivische Teilansicht der Förderanlage aus Fig. 9.

### BESCHREIBUNG EXEMPLARISCHER AUSFÜHRUNGSFORMEN

Um die Erfindung zu veranschaulichen, werden bevorzugte Ausführungsformen mit Bezug auf die Figuren näher beschrieben.

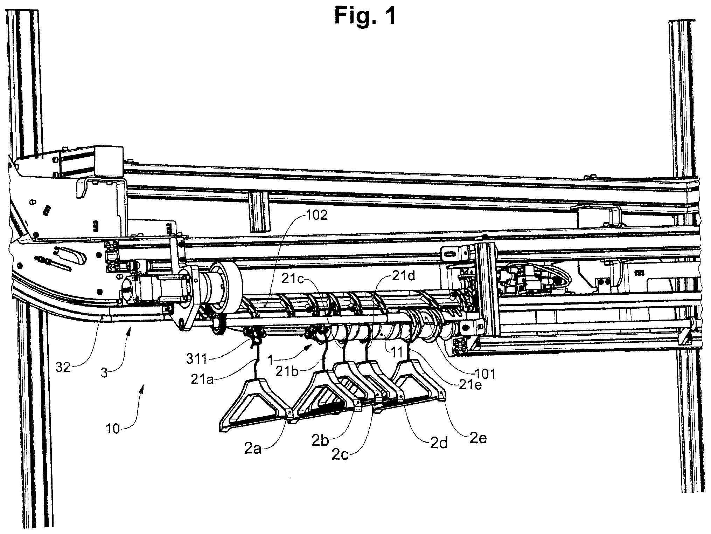

Figur 1 zeigt eine perspektivische Teilansicht einer Ausführungsform einer Förderanlage 10. Die Förderanlage 10 umfasst eine Übergabevorrichtung 1 und eine Hängefördervorrichtung 3 mit einer Laufschiene 32, auf welcher Transporteinheiten (in der Figur von der Übergabevorrichtung 1 verdeckt) angeordnet sind. Die Übergabevorrichtung 1 umfasst eine Förderwendel 11, auf welcher Haken 21b-e angeordnet sind und welche somit die Produkteträger 2b-e fördert. Der Produkteträger 2a mit dem Haken 21a ist bereits an die Hängefördervorrichtung 3 übergeben und befindet sich nicht mehr auf der Förderwendel 11. Der Haken 21 a ist daher im Eingriff mit einer Öse 311 einer Transporteinheit. Die Förderwendel 11 wird durch eine erste Antriebswendel 101 angetrieben. Eine zweite Antriebswendel 102, welche die Transporteinheiten der Hängefördervorrichtung 3 antreibt, ist ebenfalls dargestellt.

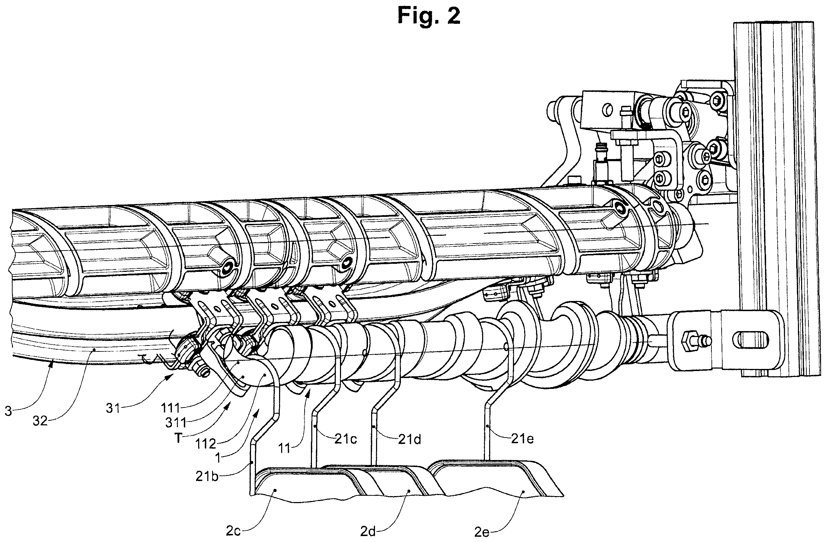

Figur 2 zeigt eine perspektivische Ansicht der Förderanlage aus Figur 1 um den Transferbereich T. Die Förderwendel 11 der Übergabevorrichtung 1 weist einen Übergabewendelgang 112 auf, welcher in einer exzentrisch angeordneten Führungszunge 111 endet. Der Übergabewendelgang 112 weist eine quasi-antiklastische Fläche in Form einer Sattelfläche mit einer schraubenlinienförmigen Hauptrichtung auf. Im Übergabewendelgang 112 befindet sich der Haken 21b, welcher in einem Sattelpunkt der Sattelfläche aufliegt. Der Produkteträger des Hakens 21 b ist in der Figur nicht sichtbar. Durch Rotation der Förderwendel 11 beschreibt der Haken 21b zusätzlich zu einer linearen Bahn entlang der Förderwendel 11 eine transversal gekrümmte Bahn, mittels welcher der Haken 21b kontrolliert in Richtung der Hängefördervorrichtung 3 gefördert wird. Das Ende des Hakens 21 b ragt in die Öse 311 einer im Transferbereich T bereitgestellten Transporteinheit 31, welche ein auf der Laufschiene 32 der Hängefördervorrichtung 3 bewegbarer Laufwagen ist. In der Figur sind zwei weitere nachfolgende Laufwagen gezeigt, welche teilweise von der Förderwendel 11 verdeckt sind. Hinter dem Haken 21b sind Haken 21c, 21d und 21e der Produkteträger 2c, 2d und 2e auf der Förderwendel 11 angeordnet.

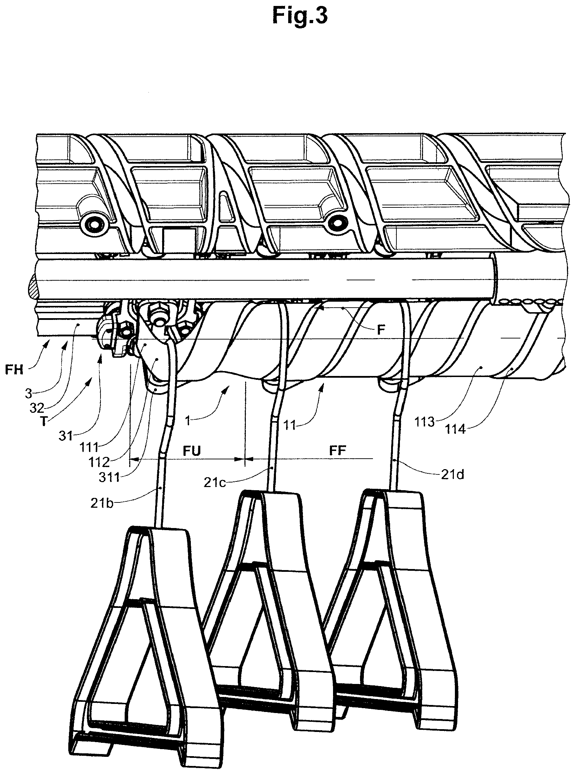

Figur 3 zeigt eine Seitenansicht der Förderanlage aus Figur 1 um den Transferbereich T. Die Förderwendel 11 der Übergabevorrichtung 1 weist Wendelgänge 113 mit Wendelflanken 114 auf. Die Förderwendel 11 definiert eine Förderstrecke für die Haken 21 b-d mit einem Förderabschnitt FF und einem Übergabeabschnitt FU. im Übergabeabschnitt FU befindet sich der Übergabewendelgang 112, welcher in die Führungszunge 111 mündet. Im Förderabschnitt FF werden die Haken 21c und 21d durch Rotation der Förderwendel 11 auf einer linearen Bahn entlang der Längsachse der Förderwendel 11 gefördert. Die lineare Bahn der Förderstrecke im Förderabschnitt FF ist durch den Pfeil F schematisch illustriert. Im Übergabeabschnitt FU führt die Rotation der Förderwendel 11 zu einer der linearen Bahn entlang der Längsachse der Förderwendel 11 überlagerten transversal gekrümmten Bahn des Hakens 21b. Der Haken 21b liegt in einem lokalen Minimum der Fläche des Übergabegewindegangs 112 bezüglich der Längsachse der Förderwendel 11 auf. Die Transporteinheiten 31 sind auf einer Förderstrecke FH der Hängefördervorrichtung angeordnet, welche im Transferbereich parallel zur Förderwendel 11 angeordnet ist. In der Figur ist zu erkennen, wie der Übergabegewindegang 112 des Übergabeabschnitts FU kontinuierlich in einen Wendelgang 113 des Förderabschnitts FF übergeht.

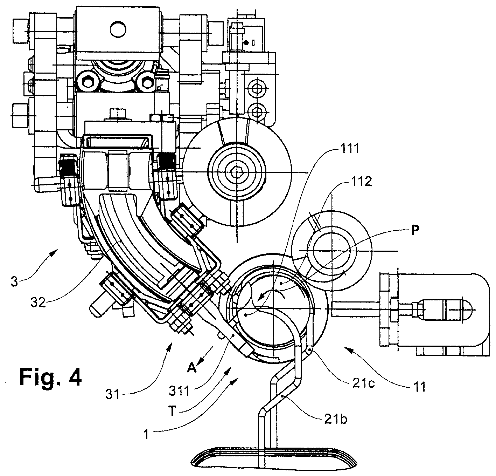

Figur 4 zeigt eine Frontalansicht des Transferbereichs T der Förderanlage aus Figur 1. Die exzentrisch angeordnete Führungszunge 111 mit einem kreissegmentförmigen Querschnitt ist zu erkennen. Der Krümmungsradius des kreissegmentförmigen Querschnitts der Führungszunge 111 ist kleiner als der Radius der Querschnittsfläche der Förderwendel 11. Es ist weiter zu erkennen, wie der Übergabegewindegang 112 kontinuierlich in die Führungszunge 11 mündet. Der Haken 21b, welcher sich im Übergabegewindegang 112 befindet, ragt mit einem Ende in die Öse 311 der Transporteinheit 31 der Hängefördervorrichtung 3, während der Haken 21b auf der Führungszunge 11 aufliegt. Durch Rotation der Förderwendel 11 in Richtung des Pfeils P wird der Haken 21b von der Führungszunge 111 in Richtung A in die Öse 311 übergeben. Die Laufschiene 32 ist im Transferbereich derart angeordnet, dass die Transporteinheit 31 geneigt wird und die Öffnung der Öse 311 dadurch im Wesentlichen senkrecht zur Richtung A steht, was die Übergabe des Hakens 21 b erleichtert.

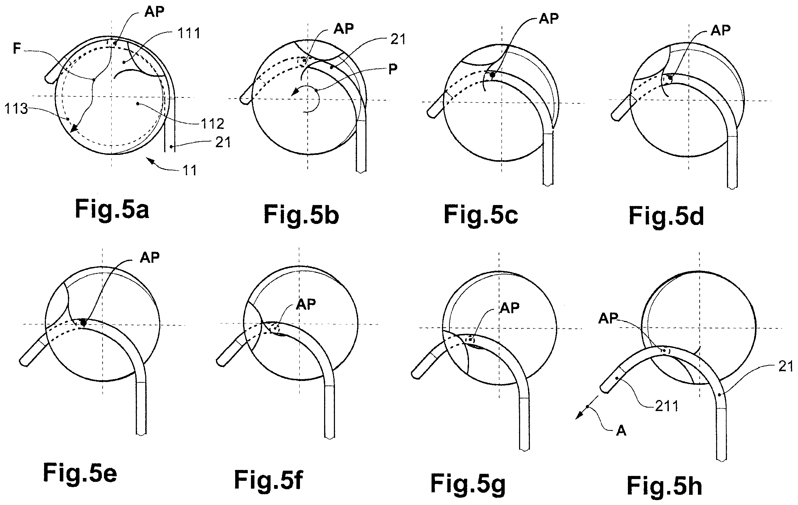

Figuren 5a-5h zeigen eine schematische Darstellung des Übergabeabschnitts in einer Frontalansicht der Förderwendel 11. Die Figuren zeigen die Förderwendel 11 mit dem Übergabewendelgang 112 und der Führungszunge 111 für verschiedene Winkelpositionen der Förderwendel 11, welche in Richtung P des Pfeils, wie in Figur 5b gezeigt, rotiert. Der Übergabewendelgang 112 weist eine sattelflächenförmige Oberfläche auf. Um die zur linearen Bahn überlagerte transversal gekrümmte Bahn der Förderstrecke im Übergabeabschnitt der Förderwendel 11 zu illustrieren, ist der Auflagepunkt AP eines sich im Übergabewendelgang 112 befindenden Hakens 21 für die verschiedenen Winkelpositionen der Förderwendel 11 gezeigt. Die transversal gekrümmte Förderstrecke ist durch den gekrümmten Pfeil F schematisch illustriert. In Figur 5a befindet sich der Haken kurz vor dem Eintritt in den Übergabeabschnitt der Förderwendel 11 und liegt mit dem Auflagepunkt AP auf dem Wendelgang 113 auf, welcher an den Übergabewendelgang 112 anschliesst. Nach dem Eintritt in den Übergabeabschnitt liegt der Auflagepunkt AP jeweils auf einem Sattelpunkt der Oberfläche des Übergabewendelgangs 112. Es ist zu erkennen, dass sich der Auflagepunkt AP des Hakens 21 kurz vor Eintritt in den Übergabewendelgang 112, wie in Figur 5a gezeigt, in der durch die Längsachse der Förderwendel 11 definierten Vertikalebene liegt. Kurz vor der Übergabe an eine Hängefördervorrichtung, wie in Figur 5h gezeigt, weicht der Auflagepunkt AP derart von der Vertikalebene ab, dass ein Abschnitt 211 des Hakens 21 über die Querschnittsfläche der Förderwendel 11 in Richtung A der Übergabe hinausragt, so dass der Abschnitt 211 in eine im Transferbereich bereitstehende Öse einer Transporteinheit eingreifen kann, bevor die Führungszunge 111 durch weitere Rotation der Förderwendel 11 den Haken 21 freigibt.

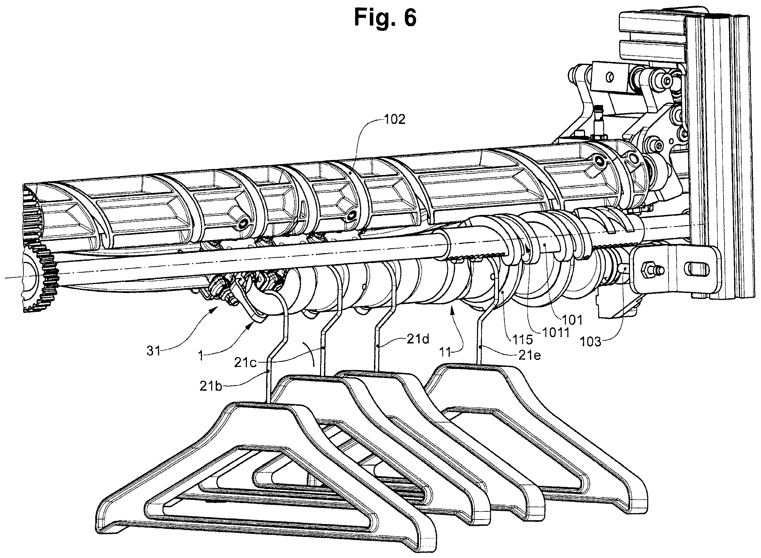

Figur 6 zeigt eine weitere perspektivische Teilansicht der Förderanlage aus Figur 1. Zu erkennen sind die erste Antriebswendel 101 und die zweite Antriebswendel 102. Die erste Antriebswendel 101 weist Wendelgänge 1011 auf, welche in Erhöhungen 115 der Förderwendel 11 eingreifen und durch Rotation die Förderwendel 11 antreiben. Die zweite Antriebswendel 102 weist Wendelgänge 1021 auf, welche in Mitnehmerelemente der Transporteinheiten 31 eingreifen und so die Transporteinheiten 31 entlang der Laufschiene (in der Figur verdeckt) antreiben können. In der Figur zu sehen ist weiter ein erster Sensor 103, welcher in einem hinteren Bereich der Förderwendel 11 angeordnet ist und Haken auf der Förderwendel 11 detektieren kann.

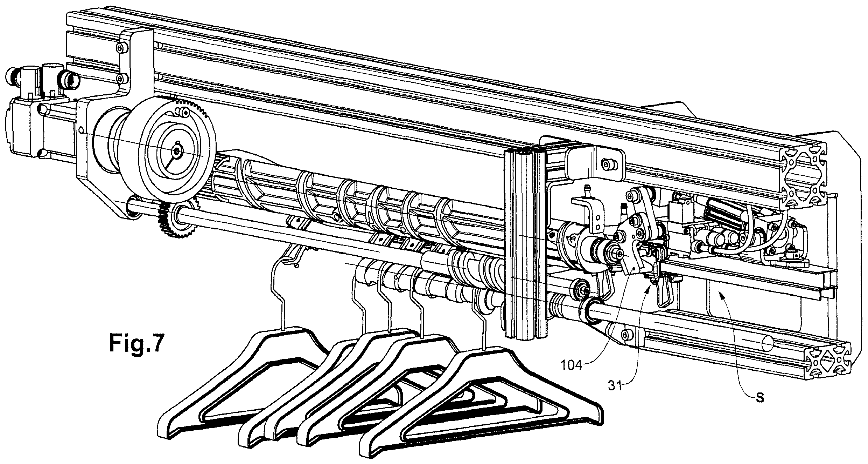

Figur 7 zeigt eine rückwärtige perspektivische Ansicht der Förderanlage aus Figur 1. Zu sehen ist eine Transporteinheit 31, welche sich in einer Staustrecke S der Hängefördervorrichtung befindet. Ein Barriereelement 104 hält die Transporteinheit 31 in der Staustrecke S. Bei Detektion eines Hakens auf der Förderwendel durch den ersten Sensor gibt das Barriereelement 104 die Transporteinheit 31 aus der Staustrecke S ab, so dass die Transporteinheit 31 in den Transferbereich gefördert werden kann.

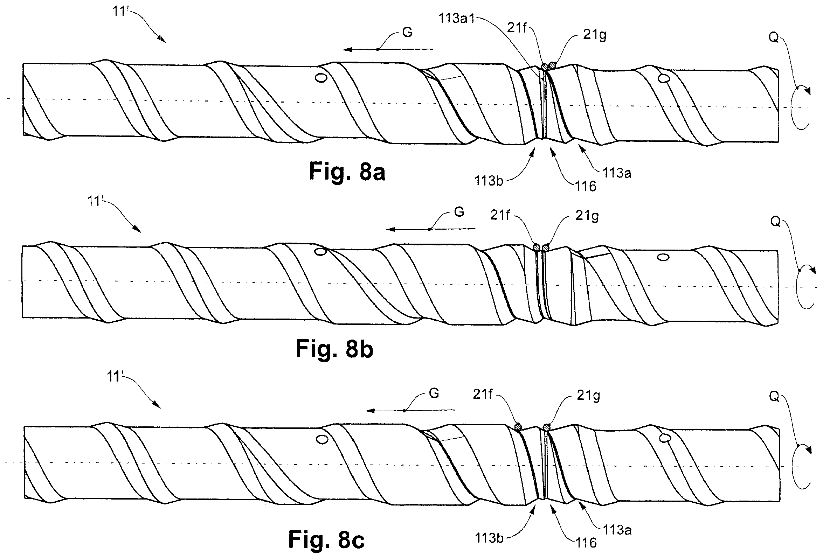

Figur 8a-c zeigen Seitenansichten einer Ausführungsform einer Förderwendel 11' mit einem Vereinzelungswendelgang 116 für verschiedene Positionen der Förderwendel 11'. In der in Figur 8a gezeigten Position der Förderwendel 11' liegt der Vereinzelungswendelgang 116 zwischen den Wendelgängen 113a und 113b und weist im gezeigten Abschnitt eine Nullsteigung auf. Die Förderwendel 11' rotiert in Richtung des Pfeils Q. Die Förderrichtung ist durch den Pfeil G angezeigt. Haken 21f und 21 g liegen auf der Förderwendel 11' an einer Stelle aneinander an, in welcher der Vereinzelungswendelgang 116 aus einer Abstufung der Wendelflanke 113a1 entsteht. Durch den Vereinzelungswendelgang 116 werden die Haken 21f und 21g räumlich getrennt, was in Figur 8b zu sehen ist, welche die Förderwendel 11' nach einer halben Umdrehung bezüglich der Position in Figur 8a zeigt. Durch die räumliche Trennung kann der Haken 21f weiter in Richtung G gefördert werden. Der Haken 21g befindet sich im Vereinzelungswendelgang 116 und beschreibt eine zusätzliche Schlaufe um die Förderwendel 11'. In Figur 8c ist die Förderwendel 11'wieder in der Position aus Figur 8a gezeigt, wobei sich der Haken 21f räumlich getrennt vom Haken 21g im Wendelgang 113b befindet und in Richtung von G gefördert wird. Der Haken 21 g befindet sich an der Stelle der Förderwendel, in welcher der Vereinzelungswendelgang 116 mit dem Wendelgang 113a zusammentrifft. Da der Haken 21g vereinzelt an dieser Stelle liegt, d.h. sich kein Haken vor ihm befindet (wie das in Figur 8a der Fall ist), kann der Haken 21g durch den Wendelgang 113a in Richtung von G gefördert werden, ohne in den Vereinzelungswendelgang 116 einzutreten.

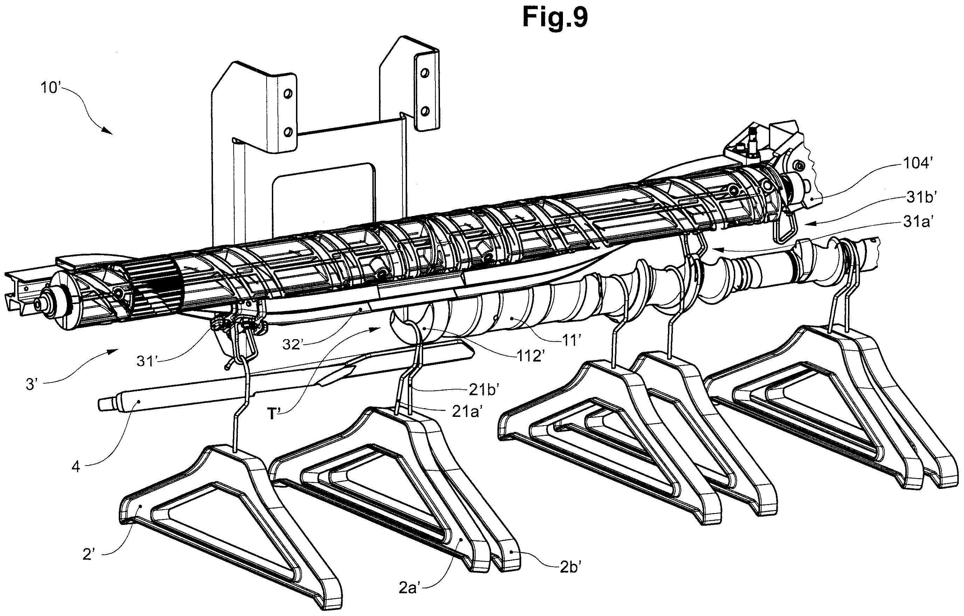

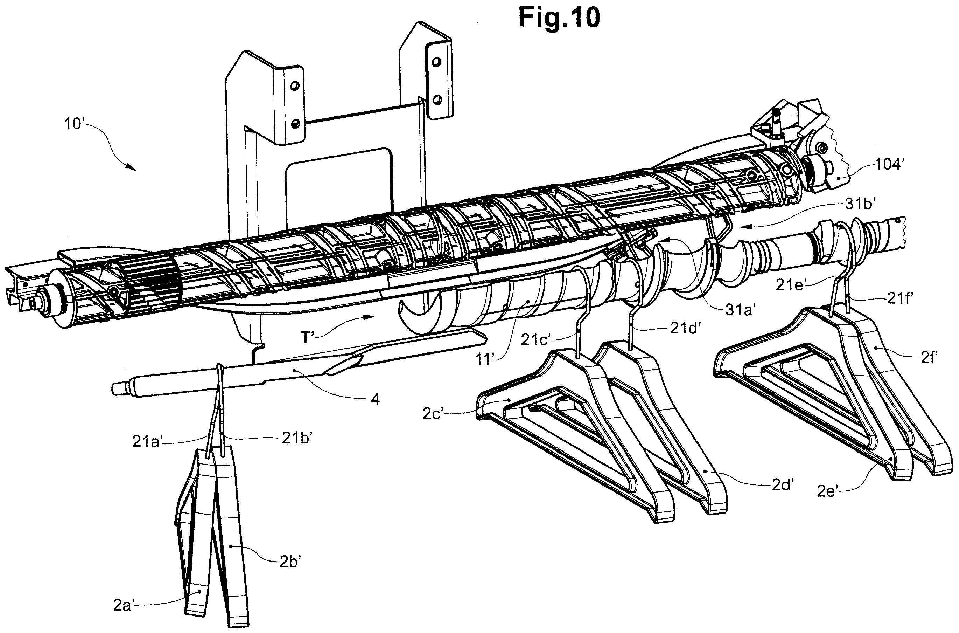

Figur 9 zeigt eine perspektivische Teilansicht einer weiteren Ausführungsform einer Förderanlage 10'. Im Transferbereich T' ist unterhalb der Laufschiene 32' der Hängefördervorrichtung 3' eine Auffangschiene 4 angeordnet. Ein Produkteträger 2' ist bereits an eine Transporteinheit 31' der Hängefördervorrichtung 3' übergeben worden. Im Übergabewendelgang 112' der Förderwendel 11' befinden sich die Haken 21a', 21b' der Produkteträger 2a', 2b', wobei sich die Haken 21a', 21b' überkreuzen und daher unerwünscht für die weitere Förderung durch die Hängefördervorrichtung 3' sind. Ein erster Sensor (nicht gezeigt in der Figur 9) ist bei der Förderwendel 11' angeordnet und ausgebildet, unerwünschte Haken, wie z.B. die überkreuzten Haken 21a', 21b' zu detektieren. Der erste Sensor ist mit einer Steuerung verbunden, welche wiederum mit einem Barriereelement 104' verbunden ist. Das Barriereelement 104' ist ausgebildet, Transporteinheiten in einer Staustrecke der Hängefördervorrichtung zurückzuhalten, falls der erste Sensor unerwünschte Haken auf der Förderwendel detektiert. In Figur 9 wurden die Transporteinheiten 31a', 31b' aufgrund der unerwünschten Haken 21a', 21b' durch das Barriereelement 104' zurückgehalten, wobei in der Figur 9 die Transporteinheiten 31a', 31b' kurz nach erneuter Freigabe durch das Barriereelement 104' gezeigt sind. Die Transporteinheiten 31a', 31b' werden durch das Barriereelement 104' so lange in der Staustrecke zurückgehalten, dass zum Zeitpunkt, an welchem die unerwünschten Haken 21a', 21b' in den Transferbereich T' kommen, keine Transporteinheiten im Transferbereich T' vorhanden sind und die unerwünschten Haken 21a', 21b' bzw. Produkteträger 2a', 2b' daher ausgeschleust werden können, anstatt in Transporteinheiten übergeben zu werden. Die zurückgehaltenen Transporteinheiten 31a', 31b' werden daraufhin wieder rechtzeitig durch das Barriereelement 104' aus der Staustrecke freigegeben, so dass die Transporteinheiten 31a', 31 b'zur Übernahme von nachfolgenden Haken auf der Förderwendel 11' im Transferbereich T' bereitgestellt werden können. Figur 10 zeigt eine weitere perspektivische Teilansicht der Förderanlage 10' aus Figur 9, wobei die Förderwendel 11' gegenüber der Position in Figur 9 derart weiterrotiert wurde, dass die Produkteträger 2a', 2b' mit den unerwünschten Haken 21a', 21b' an die Auffangschiene 4 übergeben wurden. Da im Transferbereich T' keine Transporteinheiten zur Übernahme der Produkteträger 2a', 2b' bereitgestellt waren, sind die Produkteträger 2a', 2b' an die Auffangschiene 4 übergeben worden, mittels welcher die Produkteträger 2a', 2b' mit den überkreuzten Haken 21a', 21b' ausgeschleust werden. Die Transporteinheiten 31a', 31b' haben sich im Vergleich zur Position in Figur 9 ein Stück in Richtung des Transferbereichs T' bewegt, so dass diese im Transferbereich T' für die nächsten Produkteträger 2c', 2d' mit den Haken 21c', 21d' bereitgestellt werden können. Für die nachfolgenden Produkteträger 2e', 2f' mit überkreuzten Haken 21e', 21f' kann die Steuerung bei Detektion durch den ersten Sensor das Barriereelement 104' wieder aktivieren, damit nachfolgende Transporteinheiten wieder zurückgehalten werden und die Produkteträger 2e', 2f' an die Auffangschiene 4 übergeben werden können.

## Patentansprüche

1. Übergabevorrichtung (1) zur vereinzelten Übergabe von Produkteträgern (2a-2e; 2c', 2d') mit Haltemitteln (21, 21a-21e; 21c', 21d') an eine Hängefördervorrichtung, umfassend eine Förderwendel (11,11'), welche eine Förderstrecke (F) für die Haltemittel (21, 21a-21e; 21a'-21 f') mit einem Förderabschnitt (FF) und einem Übergabeabschnitt (FU) definiert, wobei die Förderstrecke (F) im Förderabschnitt (FF) eine lineare Bahn beschreibt und im Übergabeabschnitt (FU) zur linearen Bahn überlagert eine transversal gekrümmte Bahn beschreibt, welche durch eine Überlagerung einer horizontalen und einer vertikalen Komponente in einer zur Längsachse der Förderwendel (11, 11') senkrechten Ebene beschrieben wird, so dass die transversal gekrümmte Bahn eine horizontale Komponente aufweist, wobei die Förderwendel (11, 11') im Übergabeabschnitt (FU) in einer exzentrisch angeordneten Führungszunge (111) endet, welche einen im Vergleich zum Querschnitt der Förderwendel (11, 11') im Förderbereich sich verjüngenden Querschnitt aufweist, wobei die Förderwendel (11, 11') im Übergabeabschnitt (FU) einen Übergabewendelgang (112, 112') mit einer quasi-antiklastischen Fläche aufweist, wobei die Förderstrecke (F) im Übergabeabschnitt (FU) derart in der quasi-antiklastischen Fläche liegt, dass die Haltemittel (21, 21a-21e; 21a'-21f') zu einer linearen Bahn überlagert eine transversal gekrümmte Bahn beschreiben,
**dadurch gekennzeichnet, dass**
die Förderwendel (11, 11') mindestens einen Vereinzelungswendelgang (11 6) zur Vereinzelung von aneinander liegenden Haltemitteln (21, 21a-21e; 21c', 21 d') aufweist, welcher eine zu übrigen Wendelgängen (113, 11 3a, 113b) der Förderwendel), in welchen die Haltemittel (21, 21 a-21 e; 21 c', 21 d') förderbar sind, unterschiedliche Steigung aufweist, und dadurch, dass die Förderwendel (11, 11') aus dem Förderabschnitt (FF) kontinuierlich in den Übergabewendelgang (112, 112') im Übergabeabschnitt (FU) übergeht, und dadurch, dass die Haltemittel (21, 21a-21e; 21a'-21 f') bei einem Anhalten der Förderwendel (11, 1 1') an der jeweiligen aktuellen Position verbleiben und von dieser Position bei Wiederaufnahme der Rotation der Förderwendel (11, 11') weitergefördert werden können.

2. Übergabevorrichtung (1) nach Patentanspruch 1, **dadurch gekennzeichnet, dass** die Oberfläche des Übergabewendelgangs (112, 112') eine Sattelfläche mit einer schraubenlinienförmigen Hauptrichtung umfasst und/oder dass der Übergabewendelgang (112, 112') eine Wendeltiefe (w) aufweist, welche grösser als der halbe Kerndurchmesser (d) der Förderwendel (11,11') im Förderabschnitt (FF) ist und/oder dass die Förderwendel (11, 11') aus dem Förderabschnitt (FF) kontinuierlich in den Übergabewendelgang (112, 112') im Übergabeabschnitt (FU) übergeht.

3. Förderanlage (10, 10') zum Fördern von Produkteträgern (2a-2e; 2a'-2f') mit Haltemitteln (21, 21a-21e; 21a'-21 f'), umfassend eine Übergabevorrichtung (1) nach einem der vorangehenden Patentansprüche, eine Hängefördervorrichtung (3, 3') mit einer Mehrzahl von Transporteinheiten (31; 31', 31a', 31b') für die Produkteträger (2a-2e; 2a'-2f'), wobei die Transporteinheiten (31; 31', 31a', 31 b') Eingriffmittel (311) für die Haltemittel (21, 21a-21e; 21a'-21 f') der Produkteträger (2a-2e; 2a'-2f') aufweisen, und die Förderanlage (10, 10') einen Transferbereich (T, T') aufweist, in welcher die Produkteträger (2a-2e; 2a'-2f') von der Übergabevorrichtung (1) an die Hängefördervorrichtung (3, 3') übergeben werden.

4. Förderanlage (10, 10') nach Patentanspruch 3, **dadurch gekennzeichnet, dass** die Hängefördervorrichtung (3,3') im Transferbereich (T, T') eine Förderstrecke (FH) aufweist, welche parallel zur Förderwendel (11, 11') angeordnet ist.

5. Förderanlage (10, 10') nach Patentanspruch 3 oder 4, **dadurch gekennzeichnet, dass** die Hängefördervorrichtung (3,3') eine Laufschiene (32, 32') aufweist, wobei die Transporteinheiten (31; 31', 31a', 31 b') auf der Laufschiene (32, 32') mit veränderlichem Abstand zueinander förderbare Laufwagen sind.

6. Förderanlage (10, 10') nach einem der Patentansprüche 3 bis 5, **dadurch gekennzeichnet, dass** die Förderanlage (10, 10') eine Steuerung aufweist, welche die Übergabe der Produkteträger (2a-2e; 2a'-2f') von der Übergabevorrichtung (1) an die Hängefördervorrichtung (3,3') steuert.

7. Förderanlage (10, 10') nach Patentanspruch 6, **dadurch gekennzeichnet, dass** die Förderanlage (10, 10') eine erste Antriebseinheit (101) zum Antrieb der Förderwendel (11, 11') und eine zweite Antriebseinheit (102) zum Antrieb der Transporteinheiten (31; 31', 31a', 31b') im Transferbereich (T, T') umfasst, wobei die erste und die zweite Antriebseinheit (101, 102) durch die Steuerung derart gesteuert werden, dass im Transferbereich (T, T') bei der Übergabe eines Haltemittels (21, 21a-21e; 21c', 21d') von der Übergabevorrichtung (1) an die Hängefördervorrichtung (3, 3') jeweils eine Transporteinheit (31; 31', 31a', 31b') bereitgestellt ist.

8. Förderanlage (10, 10') nach Patentanspruch 6 oder 7, **dadurch gekennzeichnet, dass** die Steuerung die Fördergeschwindigkeit der Transporteinheiten (31; 31', 31a', 31b') mit der Fördergeschwindigkeit der Produkteträger (2a-2e; 2c', 2d') bei der Übergabe synchronisiert.

9. Förderanlage (10, 10') nach einem der Patentansprüche 6 bis 8, **dadurch gekennzeichnet, dass** die Steuerung ausgebildet ist, im Transferbereich (T, T') die Anzahl der pro Transporteinheit (31; 31', 31 a', 31 b') übergebenen Produkteträger (2a-2e; 2c', 2d') zu steuern und/oder dass an der Förderwendel (11, 11') ein erster mit der Steuerung verbundener Sensor (103) angeordnet ist, welcher Haltemittel (21,21a-21e) des Produkteträgers (2a-2e; 2a'-2f') auf der Förderwendel (11, 11') detektieren kann, wobei vorzugsweise zwischen einer Staustrecke der Hängefördervorrichtung (3, 3') und dem Transferbereich (T, T') ein Barrieelement (104, 104') angeordnet ist, welche mit der Steuerung zur Freigabe von jeweils einer Transporteinheit (31; 31', 31a', 31b') bei Detektion eines Haltemittels (21, 21a-21e; 21a'-21 f') auf der Förderwendel (11, 11') durch den ersten Sensor (103), verbunden ist.

10. Förderanlage (10') nach einem der Patentansprüche 3 bis 9, **dadurch gekennzeichnet, dass** die Förderanlage (10') eine Auffangschiene (4) zum Ausschleusen von Produkteträgern (2a', 2b', 2e', 2f') mit unerwünschten Haltemitteln (21a', 21b', 21e', 21f') umfasst, wobei die Auffangschiene (4) im Transferbereich (T') derart angeordnet ist, dass Produkteträger (2a', 2b', 2e', 2f') von der Übergabevorrichtung an die Auffangschiene (4) übergeben werden, wenn im Transferbereich (T') keine Transporteinheit bereitgestellt ist und/oder dass stromabwärts vom Transferbereich (T, T') ein zweiter Sensor angeordnet ist, welcher ausgebildet ist, die Anzahl Haltemittel (21, 21a-21e; 21c', 21d') in jeweils einem Eingriffmittel (311) der Transporteinheit (31; 31', 31a', 31 b') zu ermitteln.

11. Verfahren zum Betrieb einer Förderanlage (10, 10') nach einem der Patentansprüche 3 bis 10, umfassend die Schritte: i) Fördern der Haltemittel (21, 21a-21e; 21a'-21f') der Produkteträger (2a-2e; 2a'-2f') auf der Förderwendel (11,11') der Übergabevorrichtung (1); ii) Übergabe der Produkteträger (2a-2e; 2c', 2d') von der Übergabevorrichtung (1) an die Hängefördervorrichtung (3,3') im Transferbereich (T, T'), wobei die Haltemittel (21, 21a-21e; 21c', 21d') bei der Übergabe in das Eingriffmittel (311) einer Transporteinheit (31; 31', 31a', 31b') derart kontrolliert gefördert werden, dass die Haltemittel (21, 21a-21e; 21c', 21d') bei einem Anhalten der Förderwendel an der jeweiligen aktuellen Position verbleiben und von dieser Position bei Wiederaufnahme der Rotation der Förderwendel (11, 11') weitergefördert werden.

12. Verfahren nach Patentanspruch 11, **dadurch gekennzeichnet dass** die Haltemittel (21, 21a-21e; 21a'-21f') im Übergabeabschnitt (FU) der Förderwendel (11, 11') auf einem Auflagepunkt (AP) auf der Förderwendel (11, 11'), welcher von der durch die Längsachse der Förderwendel (11, 11') definierten Vertikalebene abweicht, derart aufliegen, dass ein Abschnitt (211) des Haltemittels (21, 21a-21e; 21a'-21f'), vorzugsweise eines Hakens, in einer transversalen, vorzugsweise zur Hängefördervorrichtung (3, 3') hin orientierten, Richtung (A) über die Querschnittsfläche der Förderwendel (11, 11') hinausragt.

13. Verfahren nach Patentanspruch 11 oder 12, **dadurch gekennzeichnet, dass** die Haltemittel (21, 21a-21e; 21c'. 21d') bei der Übergabe kontrolliert derart gefördert werden, dass jeweils ein Abschnitt (211) des Haltemittels (21, 21a-21e; 21c', 21d'), vorzugsweise eines Hakens, in das Eingriffmittel (311), vorzugsweise eine Öse, einer Transporteinheit (31; 31', 31a', 31b') ragt, bevor das Haltemittel (21, 21a-21e; 21c', 21d') die Übergabevorrichtung (1) verlässt und an die Hängefördervorrichtung (3, 3') übergeben wird.

## Claims

1. Transfer device (1) for the singularized transfer of product carriers (2a-2e; 2c , 2d) having holding means (21, 21a-21e;, 21c , 21d) to a suspension conveyor device, comprising a conveying helix (11, 11) which defines a conveyor section (F) having a conveyor portion (FF) and a transfer portion (FU) for the holding means (21, 21a-21e; 21a -21f), wherein the conveyor section (F) in the conveyor portion (FF) describes a linear path and in the transfer portion (FU), in a manner superimposed on the linear path, describes a transversely curved path which is described by superimposing a horizontal component and a vertical component in a plane which is perpendicular to the longitudinal axis of the conveying helix (11, 11) such that the transversely curved path comprises a horizontal component, wherein the conveying helix (11, 11) in the transfer portion (FU) terminates in an eccentrically disposed guide tongue (111) which, in comparison to the cross section of the conveying helix (11, 11), comprises a tapered cross section in the conveying region, wherein the conveying helix (11, 11) in the transfer portion (FU) comprises a transition helical turn (112, 112) having a quasi-anticlastic face, wherein the conveyor section (F) in the transfer portion (FU) lies on the quasi-anticlastic face in such a manner that the holding means (21, 21-12e; 21a -21f), superimposed to a linear path, describe a transversely curved path, **characterized in that** the conveying helix (11, 11) comprises at least one singularizing helical turn (116) for singularizing adjoining holding means (21, 21a-21e; 21c , 21d) which comprises a slope which is different from that of other helical turns (113, 113a, 113b) of the conveying helix in which the holding means (21, 21 a-21e; 21c , 21d) are conveyable, and **in that** the conveying helix (11, 11) from the conveyor portion (FF) transitions continuously to the transfer helical turn (112, 112) in the transfer portion (FU), and **in that** the holding means (21, 21a-21e, 21a -21f) in a stoppage of the conveying helix (11, 11) remain at the respective current position and are able to be conveyed onward from said position when the rotation of the conveying helix (11, 11) is resumed.

2. Transfer device (1) according to Patent Claim 1, **characterized in that** the surface of the transfer helical turn (112, 112) includes a saddle face with a helicoid main direction, and/or **in that** the transfer helical turn (112, 112) comprises a turn depth (w) which is larger than half the core diameter (d) of the conveying helix (11, 11) in the conveyor portion (FF), and/or **in that** the conveying helix (11, 11) from the conveyor portion (FF) transitions continuously to the transfer helical coil (112, 122) in the transfer portion (FU).

3. Conveyor system (10, 10) for conveying product carries (2a-2e; 2a -2f) with holding means (21, 21a-21e; 21a -21f), comprising a transfer device (1) according to one of the preceding patent claims, a suspension conveyor device (3, 3) having a plurality of transport units (31; 31 , 31a , 31b) for the product carriers (2a-2e; 2a -2f), wherein the transport units (31; 31 , 31a , 31b) comprise engagement means (311) for the holding means (21, 21a-21e; 21a -21f) of the product carriers (2a-2e; 2a -2f), and the conveyor system (10, 10) comprises a transfer region (T, T) in which the product carriers (2a-2e; 2a -2f) are transferred from the transfer device (1) to the suspension conveyor device (3, 3).

4. Conveyor system (10, 10) according to Patent Claim 3, **characterized in that** the suspension conveyor device (3, 3), in the transfer region (T, T), comprises a conveyor section (FH) which is disposed so as to be parallel to the conveying helix (11, 11).

5. Conveyor system (10, 10) according to Patent Claim 3 or 4, **characterized in that** the suspension conveyor (3, 3) comprises a running rail (32, 32), wherein the transport units (31; 31 , 31a , 31b) are carriages which are conveyable at variable mutual spacings on the running rail (32, 32).

6. Conveyor system (10, 10) according to one of Patent Claims 3 to 5, **characterized in that** the conveyor system (10, 10) comprises a control unit which controls the transfer of the product carriers (2a-2e; 2a -2f) from the transfer device (1) to the suspension conveyor device (3, 3).

7. Conveyor system (10, 10) according to Patent Claim 6, **characterized in that** the conveyor system (10, 10) comprises a first drive unit (101) for driving the conveying helix (11, 11) and a second drive unit (102) for driving the transport units (31; 31 , 31a , 31b) in the transfer region (T, T), wherein the first drive unit (101) and the second drive unit (102) are controlled by the control unit in such a manner that one transport unit (31; 31 , 31a , 31b) is in each case provided in the transfer region (T, T) when transferring a holding means (21, 21a-21e; 21c , 21d) from the transfer device (1) to the suspension conveyor device (3, 3).

8. Conveyor system (10, 10) according to Patent Claim 6 or 7, **characterized in that** the control unit synchronizes the conveying speed of the transport units (31; 31 , 31a , 31b) and the conveying speed of the product carriers (2a-2e; 2c , 2d) when transferring.

9. Conveyor system (10, 10) according to one of Patent Claim 6 to 8, **characterized in that** the control unit is configured for controlling the number of product carriers (2a-2e; 2c , 2d) transferred per transport unit (31; 31 , 31a 31b) in the transfer region (T, T), and/or **in that** a first sensor (103), which is connected to the control unit and is able to detect holding means (21, 21a-21e) of the product carrier (2a-2e; 2a -2f) on the conveying helix (11, 11), is disposed on the conveying helix (11, 11), wherein a barrier element (104, 104) is preferably disposed between the transfer region (T, T) and a congestion section of the suspension conveyor device (3, 3), which by way of the first sensor (103) is connected to the control unit for releasing in each case one transport unit (31; 31 , 31a , 31b) when detecting a holding means (21, 21a-21e; 21a -21f) on the conveying helix (11, 11).

10. Conveyor system (10) according to one of Patent Claims 3 to 9, **characterized in that** the conveyor system (10) includes a trap rail (4) for diverting product carriers (2a, 2b, 2e, 2f) with undesirable holding means (21a , 21b , 21e , 21f), wherein the trap rail (4) is disposed in the transfer region (T) in such a manner that product carriers (2a , 2b , 2e , 2f) are transferred from the transfer device to the trap rail (4) when no transport unit is provided in the transfer region (T), and/or **in that** a second sensor, which is configured for ascertaining in each case the number of holding means (21, 21a-21e; 21c , 21d) in one engagement means (311) of the transport unit (31; 31, 31a 31b), is disposed downstream of the transfer region (T, T).

11. Method for operating a conveyor system (10, 10) according to one of Patent Claims 3 to 10, said method comprising the steps of:
i) conveying the holding means (21, 21a-21e; 21a - 21f) of the product carriers (2a-2e; 2a -2f) on the conveying helix (11, 11) of the transfer device (1);
ii) transferring the product carriers (2a-2e; 2c , 2d) from the transfer device (1) to the suspension conveyor device (3, 3) in the transfer region (T, T) wherein the holding means (21, 21a-21e; 21c;, 21d) when transferred into the engagement means (311) of a transport unit (31; 31, 31a , 31b) are conveyed in a controlled manner such that the holding means (21, 21a-21e; 21c , 21d) remain at the respective current position in a stoppage of the conveying helix and are conveyed onward from said position when the rotation of the conveying helix (11, 11) is resumed.

12. Method according to Patent Claim 1, **characterized in that** the holding means (21, 21a-21e; 21a -21f) in the transfer portion (FU) of the conveying helix (11, 11) rest in such a manner on a resting point (AP), which deviates from the vertical plane defined by the longitudinal axis of the conveying helix (11, 11), on the conveying helix (11, 11), that a portion (211) of the holding means (21, 21a-21e; 21a -21f), preferably of a hook, protrudes beyond the cross-sectional area of the conveying helix (11, 11) in a transverse direction (A), preferably oriented towards the suspension conveyor device (3, 3).

13. Method according to Patent Claim 11 or 12, **characterized in that** the holding means (21, 21a-21e; 21c , 21d) when transferred are conveyed in a controlled manner such that, in each case, a portion (211) of the holding means (21, 21a-21e; 21c , 21d), preferably of a hook, protrudes into the engagement means (311), preferably an eyelet, of a transport unit (31; 31 31a , 31b) before the holding means (21, 21a-21e; 21c , 21d) leaves the transfer device (1) and is transferred to the suspension conveyor device (3, 3).

## Revendications

1. Dispositif de transfert (1) pour le transfert individuel de supports de produits (2a-2e ; 2c', 2d') avec des moyens de retenue (21, 21a-21e ; 21c', 21d') un dispositif de convoyage a rien, comprenant une h lice de transport (11, 11'), qui d finit une section de transport (F) pour les moyens de retenue (21, 21a-21e ; 21a'-21f') avec une portion de transport (FF) et une portion de transfert (FU), la section de transport (F), dans la portion de transport (FF), d crivant une trajectoire lin aire et dans la portion de transfert (FU), de mani re superpos e la trajectoire lin aire, d crivant une trajectoire de courbure transversale qui est d crite par une superposition d'une composante horizontale et d'une composante verticale dans un plan perpendiculaire l'axe longitudinal de l'h lice de transport (11, 11'), de telle sorte que la trajectoire de courbure transversale pr sente une composante horizontale, l'h lice de transport (11, 11') se terminant dans la portion de transfert (FU) dans une langue de guidage (111) dispos e de mani re excentrique, qui pr sente une section transversale se r tr cissant dans la r gion de transport par rapport la section transversale de l'h lice de transport (11, 11'), l'h lice de transport (11, 11') pr sentant dans la portion de transfert (FU) un tournant h lico dal de transfert (112, 112') avec une surface quasi-anticlastique, la section de transport (F), dans la portion de transfert (FU), tant situ e dans la surface quasi-anticlastique de telle sorte que les moyens de retenue (21, 21a-21e ; 21a'-21f') d crivent une trajectoire de courbure transversale superpos e une trajectoire lin aire,
caract ris en ce que
l'h lice de transport (11, 11') pr sente au moins un tournant h lico dal de s paration (116) pour s parer des moyens de retenue situ s les uns contre les autres (21, 21a-21e ; 21c', 21d'), qui pr sente une pente diff rente des autres tournant h lico dal (113, 113a, 113b) de l'h lice de transport dans lesquels les moyens de retenue (21, 21a-21e ; 21c', 21d') peuvent tre transport s, et en ce que l'h lice de transport (11, 11') se prolonge de la portion de transport (FF) en continu dans le tournant h lico dal de transfert (112, 112') dans la portion de transfert (FU) et en ce que les moyens de retenue (21, 21a-21e ; 21a'-21f'), en cas d'arr t de l'h lice de transport (11, 11'), restent dans la position respective actuelle et peuvent tre de nouveau transport s de cette position lors de la reprise de la rotation de l'h lice de transport (11, 11').

2. Dispositif de transfert (1) selon la revendication 1, caract ris en ce que la surface du tournant h lico dal de transfert (112, 112') comprend une surface en forme de selle avec une direction principale h lico dale et/ou en ce que le tournant h lico dal de transfert (112, 112') pr sente une profondeur d'h lice (w) qui est sup rieure la moiti du diam tre du noyau (d) de l'h lice de transport (11, 11') dans la portion de transport (FF) et/ou en ce que l'h lice de transport (11, 11') s tende en continu de la portion de transport (FF) au tournant h lico dal de transfert (112, 112') dans la portion de transfert (FU).

3. Syst me de convoyage (10, 10') pour transporter des supports de produits (2a-2e ; 2a'-2f') avec des moyens de retenue (21, 21a-21e ; 21a'-21f'), comprenant un dispositif de transfert (1) selon l'une quelconque des revendications pr c dentes, un dispositif de convoyage a rien (3, 3') avec une pluralit d'unit s de transport (31 ; 31', 31a', 31b') pour les supports de produits (2a-2e ; 2a'-2f'), les unit s de transport (31; 31', 31a', 31b') pr sentant des moyens d'engagement (311) pour les moyens de retenue (21, 21a-21e ; 21a'-21f') des supports de produits (2a-2e ; 2a'-2f'), et le syst me de convoyage (10, 10') pr sentant une r gion de transfert (T, T') dans laquelle les supports de produits (2a-2e ; 2a'-2f') sont transf r s du dispositif de transfert (1) au dispositif de convoyage a rien (3, 3').

4. Syst me de convoyage (10, 10') selon la revendication 3, caract ris en ce que le dispositif de convoyage a rien (3, 3') dans la r gion de transfert (T, T') pr sente une section de transport (FH) qui est dispos e parall lement l'h lice de transport (11, 11').

5. Syst me de convoyage (10, 10') selon la revendication 3 ou 4, caract ris en ce que le dispositif de convoyage a rien (3, 3') pr sente un rail de roulement (32, 32'), les unit s de transport (31 ; 31', 31a', 31b') sur le rail de roulement (32, 32) tant des chariots de roulement pouvant tre transport s une distance variable les uns des autres.

6. Syst me de convoyage (10, 10') selon l'une quelconque des revendications 3 5, caract ris en ce que le syst me de convoyage (10, 10') pr sente une commande qui commande le transfert des supports de produits (2a-2e ; 2a'-2f') du dispositif de transfert (1) au dispositif de convoyage a rien (3, 3').

7. -Syst me de convoyage (10, 10') selon la revendication 6, caract ris en ce que le syst eme de convoyage (10, 10') comprend une premi re unit d'entra nement (101) pour entra ner l'h lice de transport (11, 11') et une deuxi me unit d'entra nement (102) pour entra ner les unit s de transport (31 ; 31', 31a', 31b') dans la r gion de transfert (T, T'), la premi re et la deuxi me unit d'entra nement (101, 102) tant command es par la commande de telle sorte que dans la r gion de transfert (T, T'), lors du transfert d'un moyen de retenue (21, 21a-21e ; 21c', 21d') du dispositif de transfert (1) au dispositif de convoyage a rien (3, 3'), chaque fois une unit de transport (31 ; 31', 31a', 31b') soit mise disposition.

8. Syst me de convoyage (10, 10') selon la revendication 6 ou 7, caract ris en ce que la commande synchronise la vitesse de transport des unit s de transport (31 ; 31', 31a', 31b') avec la vitesse de transport des supports de produits (2a-2e ; 2c', 2d') lors du transfert.

9. Syst me de convoyage (10, 10') selon l'une quelconque des revendications 6 8, caract ris en ce que la commande est r alis pour commander dans la r gion de transfert (T, T'), le nombre des supports de produits (2a-2e ; 2c', 2d') transf r s par unit de transport (31; 31', 31a', 31b') et/ou en ce qu'un premier capteur (103) connect la commande est dispos au niveau de l'h lice de transport (11, 11'), lequel peut d tecter des moyens de retenue (21, 21a-21e) du support de produits (2a-2e ; 2a'-2f') sur 1h lice de transport (11, 11'), un l ment barri re (104, 104') tant dispos de pr f rence entre la r gion de transfert (T, T) et une section d'accumulation du dispositif de convoyage a rien (3, 3'), qui est connect la commande pour lib rer chaque fois une unit de transport (31 ; 31', 31a', 31b') la d tection d'un moyen de retenue (21, 21a-21e ; 21a'-21f') sur l'h lice de transport (11, 11') par le premier capteur (103).

10. Syst me de convoyage (10') selon l'une quelconque des revendications 3 9, caract ris en ce que le syst me de convoyage (10') comprend un rail de collecte (4) pour vacuer des supports de produits (2a', 2b', 2e', 2f') ayant des moyens de retenue non souhait s (21a', 21b', 21e', 21f'), le rail de collecte (4) tant dispos dans la r gion de transfert (T') de telle sorte que des supports de produits (2a', 2b', 2e', 2f') soient transf r s du dispositif de transfert au rail de collecte (4) si aucune unit de transport n'est mise disposition dans la r gion de transfert (T') et/ou en ce qu'en aval de la r gion de transfert (T, T') est dispos un deuxi me capteur qui est r alis pour d terminer le nombre de moyens de retenue (21, 21a-21e ; 21c', 21d') dans un moyen d'engagement respectif (311) de l'unit de transport (31 ; 31', 31a', 31b').

11. Proc d pour le fonctionnement d'un syst me de convoyage (10, 10') selon l'une quelconque des revendications 3 10, comprenant les tapes suivantes : i) transport des moyens de retenue (21, 21a-21e ; 21a'-21f') des supports de produits (2a-2e ; 2a'-2f') sur l'h lice de transport (11, 11') du dispositif de transfert (1) ; ii) transfert des supports de produits (2a-2e ; 2c', 2d') du dispositif de transfert (1) au dispositif de convoyage a rien (3, 3') dans la r gion de transfert (T, T'), les moyens de retenue (21, 21a-21e ; 21c', 21d'), lors du transfert dans le moyen d'engagement (311) d'une unit de transport (31 ; 31', 31a', 31b'), tant transport s de mani re contr l e de telle sorte que les moyens de retenue (21, 21a-21e ; 21c', 21d'), lors d'un arr t de l'h lice de transport, restent dans la position respective actuelle et soient de nouveau transport s de cette position lors de la reprise de la rotation de l'h lice de transport (11, 11').

12. Proc d selon la revendication 11, caract ris en ce que les moyens de retenue (21, 21a-21e ; 21a'-21f') dans la portion de transfert (FU) de l'h lice de transport (11, 11'), reposent sur un point d'appui (AP) sur l'h lice de transport (11, 11') qui s' carte du plan vertical d fini par l'axe longitudinal de l'h lice de transport (11, 11'), de telle sorte qu'une portion (211) du moyen de retenue (21, 21a-21e ; 21a'-21f'), de pr f rence d'un crochet, fasse saillie dans une direction transversale (A) de pr f rence orient e vers le dispositif de convoyage a rien (3, 3'), au-del de la surface en section transversale de l'h lice de transport (11, 11').

13. Proc d selon la revendication 11 ou 12, caract ris en ce que les moyens de retenue (21, 21a-21e ; 21c', 21d'), lors du transfert, sont transport s de mani re contr l e de telle sorte qu chaque fois une portion (211) du moyen de retenue (21, 21a-21e ; 21c', 21d'), de prfrence d'un crochet, p n tre dans le moyen d'engagement (311), de pr f rence un illet, d'une unit de transport (31 ; 31', 31a', 31b'), avant que le moyen de retenue (21, 21a-21e ; 21c', 21d') quitte le dispositif de transfert (1) et soit transf r au dispositif de convoyage a rien (3, 3').
